# EUROPÄISCHE PATENTSCHRIFT

(11) **EP 1 767 914 B1**
(45) Veröffentlichungstag und Bekanntmachung des Hinweises auf die Patenterteilung: **28.12.2016**
(21) Anmeldenummer: 06019217.6
(22) Anmeldetag: 14.09.2006
(51) Int. Cl.: G01K 1/02, F24C 7/08, F24C 7/06, H01Q 1/00, H01Q 1/22

(54) **Haushaltsgeräts mit einem beheizbaren Behandlungsraum umfassend eine Antennenanordnung für den Signalaustausch zwischen einer Sende- und einer Empfangseinrichtung**
Household appliance with a heated compartment comprising an antenna for exchanging signals between a transmitting/receiving device
Appareil ménager avec un compartiment chauffé comprenant une antenne capable d'échanger des signaux entre un dispositif transmission/réception

(30) Priorität: 26.09.2005 DE 102005046012
(43) Veröffentlichungstag der Anmeldung: 28.03.2007
(73) Patentinhaber: Miele & Cie. KG, 33332 Gütersloh (DE)
(72) Erfinder: Kindler, Helmut, 48361 Beelen (DE); Scharmann, Jürgen, 33442 Herzebrock-Clarholz (DE); Kuhn, Jens, 98693 Manebach (DE)

(56) Entgegenhaltungen:
- DE-A1- 19 505 588
- GB-A- 2 071 887
- IT-A1- MO20 040 193
- US-A- 4 230 731

## Beschreibung

Antennenanordnung für den Signalaustausch zwischen einer Sende- und einer Empfangseinrichtung eines Haushaltsgeräts mit einem beheizbaren Behandlungsraum Die Erfindung betrifft eine Antennenanordnung für den Signalaustausch zwischen einer Sende-und einer Empfangseinrichtung eines Haushaltsgeräts mit einem beheizbaren Behandlungsraum.

Aus der EP 0 687 866 B1 ist ein Garofen bekannt, bei dem zur Regelung der Garraumtemperatur zwischen einem in ein Fleischstück eingespießten Fühlerelement und einem außerhalb des Garraums angeordneten Empfänger drahtlos elektrische Signale ausgetauscht werden. Die Anordnung der Empfangseinrichtung außerhalb des Garraums hat den Nachteil, dass dadurch der Signalaustausch zwischen der Sende- und der Empfangseinrichtung durch eine zwischen dem Garraum und der Empfangseinrichtung erforderliche Abdeckung gestört ist.

Ferner ist es aus der DE 29 35 282 C2 bekannt, das in dem Garraum angeordnete Heizelement selbst als Empfangseinrichtung für von einer ebenfalls in dem Garraum angeordneten Sendeeinrichtung ausgestrahlten Signale auszubilden.

Weiterer relevanter Stand der Technik ist in den Dokumenten DE 195 05 588 und IT M020 040 193 zu finden.

Der Erfindung stellt sich somit das Problem eine Antennenanordnung mit einer in dem Behandlungsraum angeordneten Empfangseinrichtung anzugeben, bei der die Empfangseinrichtung zum einen die Handhabung durch den Benutzer möglichst wenig behindert und durch den Benutzer nicht als solche zu erkennen ist.

Erfindungsgemäß wird dieses Problem durch eine Antennenanordnung mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass die Empfangseinrichtung zum einen die Handhabung durch den Benutzer möglichst wenig behindert und durch den Benutzer nicht als solche zu erkennen ist. Hierdurch ist es ermöglicht, auch kostengünstigere Empfangseinrichtungen zu verwenden, da die Empfangseinrichtung thermisch nicht direkt mit dem Heizelement in Verbindung steht. Auch wird durch die Bildung einer Baueinheit aus Heizelement, Haltevorrichtung und Empfangseinrichtung eine sehr kompakte Anordnung der genannten Bauteile ermöglicht, so dass der Zugriff des Benutzers auf das Innere des Behandlungsraums, beispielsweise zu Beschickungs- oder Reinigungszwecken, im Wesentlichen nicht behindert wird. Darüber hinaus ist durch die erfindungsgemäße Anordnung der optische Gesamteindruck des Behandlungsraums verbessert, da die Empfängseinrichtung für den Benutzer nicht ais separates Bauteil zu erkennen ist.

Eine vorteilhafte Weiterbildung der erfindungsgemäßen Lehre sieht vor, dass die Empfangseinrichtung eine Isolierung aufweist, die die Empfangseinrichtung von der Haltevorrichtung elektrisch isoliert. Hierdurch kann die Empfangseinrichtung die Funktion eines Dipols gegenüber dem Garraum übernehmen.

Zweckmäßigerweise weist die Empfangseinrichtung eine elektrische Isolierung auf, die die Empfangseinrichtung gegenüber der Umgebung vollständig elektrisch isoliert.

Grundsätzlich ist die Empfangseinrichtung nach Art, Material und Geometrie in weiten geeigneten Grenzen wählbar. Vorteilhafterweise ist die Empfangseinrichtung als eine Stabantenne ausgebildet. Hierdurch ist die Antennenanordnung auf konstruktiv einfache und damit kostengünstige Weise realisierbar.

Eine besonders vorteilhafte Weiterbildung sieht vor, dass die Empfangseinrichtung einen Sensor, insbesondere einen Temperatursensor, aufweist. Auf diese Weise ist die Zugänglichkeit des Behandlungsraums für den Benutzer und dessen nutzbares Volumen weiter verbessert.

Eine vorteilhafte Weiterbildung der vorgenannten Ausführungsform sieht vor, dass die Empfangseinrichtung einen Hohlraum aufweist, in dem der Sensor angeordnet ist. Hierdurch ist der Sensor zum einen vor Umwelteinflüssen weitestgehend geschützt. Zum anderen ist der Sensor damit für den Benutzer nicht mehr sichtbar, so dass der optische Gesamteindruck des Behandlungsraums weiter verbessert ist.

Grundsätzlich ist das Heizelement nach Art, Material, Dimensionen, Geometrie und Anordnung in weiten geeigneten Grenzen wählbar. Zweckmäßigerweise ist das Heizelement als ein Strahlungsheizkörper ausgebildet.

Die Haltervorrichtung ist nach Art und Material in weiten geeigneten Grenzen wählbar. Zweckmäßigerweise ist die Haltevorrichtung als ein Flansch ausgebildet, in dem Durchbrüche für den elektrischen Anschluss des Heizelements und der Empfangseinrichtung an eine Steuereinrichtung des Haushaltsgeräts ausgebildet sind.

Ein Ausführungsbeispiel der Erfindung ist in den Zeichnungen rein schematisch dargestellt und wird nachfolgend näher beschrieben. Es zeigt
- Figur 1: eine erfindungsgemäße Antennenanordnung in einem als Backofen ausgebildeten Haushaltsgerät,
- Figur 2: die Empfangseinrichtung aus der in Fig. 1 dargestellten Antennenanordnung sowie eine dazu alternative Empfangseinrichtung in einer Draufsicht und
- Figur 3: die Empfangseinrichtung aus Fig. 1 in einer geschnittenen Seitenansicht.

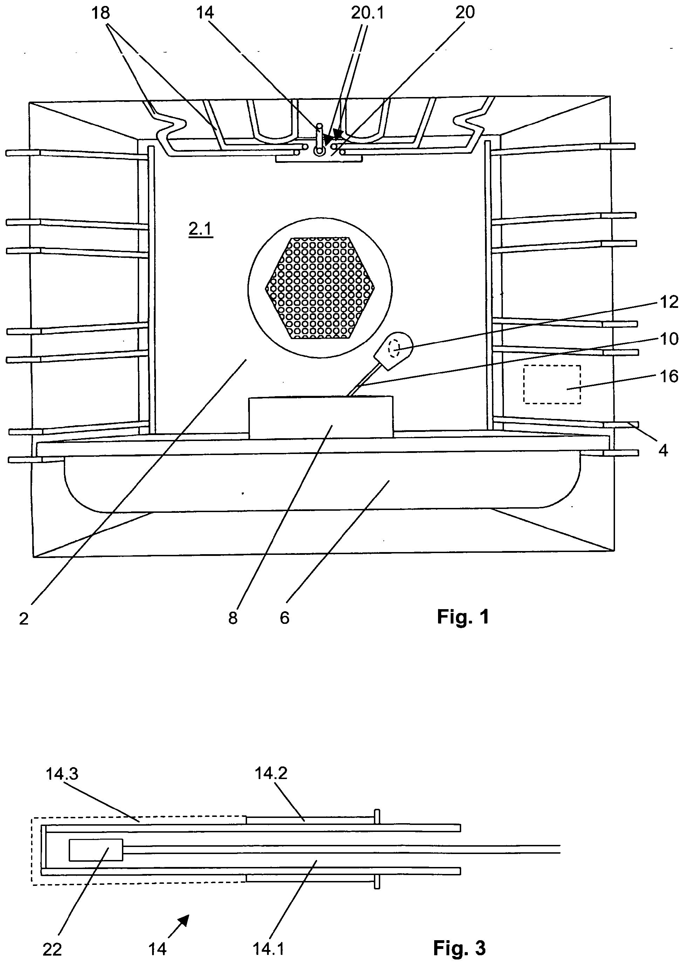

Aus der Fig. 1 ist ein als Backofen ausgebildetes Haushaltsgerät im Bereich des als Garraum ausgebildeten Behandlungsraums 2 teilweise dargestellt. An den Wänden des Garraums 2 sind Aufnahmegitter 4 angeordnet, auf denen auf Gargutabstellern, wie beispielsweise einer Fettpfanne 6, aufgelegte Gargüter, wie beispielsweise ein Fleischstück 8, in den Garraum 2 eingeschoben werden können. Bei dem vorliegenden Ausführungsbeispiel ist in das Fleischstück 8 ein als Spieß ausgebildeter Temperaturfühler 10 eingesteckt. In dem Griff des Temperaturfühlers 10 ist eine mit gestrichelten Linien angedeutete Sendeeinrichtung 12 integriert, die die elektrischen Ausgangssignale des Temperaturfühlers 10 drahtlos an eine ebenfalls in dem Garraum 2 angeordnete und als Stabantenne ausgebildete Empfangseinrichtung 14 übermittelt. Die von der Empfangseinrichtung 14 empfangenen Signale werden auf dem Fachmann bekannte Weise an eine ebenfalls gestrichelt angedeutete Steuereinrichtung 16 weitergeleitet, um in Abhängigkeit dieser Signale ein ebenfalls in dem Garraum 2 angeordnetes und als Strahlungsheizkörper ausgebildetes Heizelement 18 ein- oder auszuschalten.

Das Heizelement 18 und die Empfangseinrichtung 14 sind mittels einer gemeinsamen Haltevorrichtung 20 an der Rückwand 2.1 des Garraums 2 befestigt. Die Haltevorrichtung 20 ist bei dem vorliegenden Ausführungsbeispiel als ein Flansch ausgebildet. In dem Flansch 20 sind Durchbrüche 20.1 angeordnet, um das Heizelement 18 und die Empfangseinrichtung 14 auf dem Fachmann bekannte Weise mit der Steuereinrichtung 16 des Backofens elektrisch leitend zu verbinden.

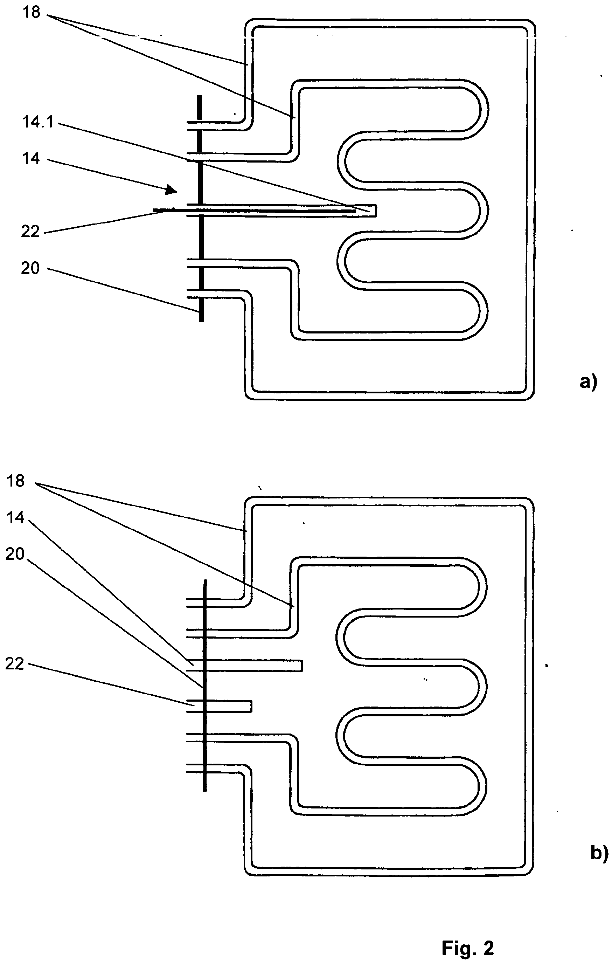

Fig. 2a zeigt das obige Ausführungsbeispiel in einer Draufsicht auf die Baueinheit aus Halterungsvorrichtung 20, Heizelement 18 und Empfangseinrichtung 14, ohne das Gargerät. Wie aus Fig. 2a deutlich hervorgeht, weist die Stabantenne 14 einen Innenraum 14.1 auf, in dem ein als Temperatursensor ausgebildeter Sensor 22 angeordnet ist. Durch den Temperatursensor 22 wird die in dem Garraum herrschende Temperatur erfasst und auf dem Fachmann bekannte Weise an die Steuereinrichtung 16 zur weiteren Verarbeitung weitergeleitet. Der Temperatursensor 22 kann beispielsweise verwendet werden, um den Temperaturfühler 10 zu kalibrieren.

Fig. 2b zeigt ein alternatives zweites Ausführungsbeispiel einer erfindungsgemäßen Antennenanordnung. Im Unterschied zu dem vorgenannten Ausführungsbeispiel ist der Sensor 22 nicht in der Empfangseinrichtung 14 integriert oder an der Empfangseinrichtung angeordnet, sondern ais separates Bauteil 22 an der Haltevorrichtung 20 gehalten.

In Fig. 3 ist die Empfangseinrichtung 14 aus dem ersten Ausführungsbeispiel im Detail dargestellt. Wie hieraus deutlich hervorgeht, weist die Empfangseinrichtung 14 eine elektrische Isolierung 14.2 auf, die zwischen dem Rest der Empfangseinrichtung 14 und der in Fig. 3 nicht dargestellten Haltevorrichtung 20 angeordnet ist, so dass die Wärmeleitung von der Haltevorrichtung 20 zu der Empfangseinrichtung 14 im Wesentlichen verhindert ist.

Da die Empfangseinrichtung 14 im Garraum 2 berührbar ist, muss sichergestellt sein, dass die Spannungsversorgung der Steuereinrichtung 16 dem sogenannten SELF-Standard (Sicherheitskleinspannung) genügt. Dies kann beispielsweise durch geeignete und dem Fachmann bekannte Maßnahmen beim Aufbau des Netzteils erreicht werden. Alternativ dazu kann die Empfangseinrichtung 14 mit einer keramischen Umhüllung 14.3 ausgestattet werden.

## Patentansprüche

1. Haushaltsgerät mit beheizbarem Behandlungsraum umfassend eine Antennenanordnung für den Signalaustausch zwischen einer Sende- und einer Empfangseinrichtung eines Haushaltsgeräts mit einem beheizbaren Behandlungsraum, insbesondere zur Ermittlung der Temperatur im Behandlungsraum, wobei die Empfangseinrichtung in dem Behandlungsraum angeordnet ist,
**dadurch gekennzeichnet,**
**dass** die Empfangseinrichtung (14) über eine gemeinsame Haltevorrichtung (20) mit einem Heizelement (18) an einer Behandlungsraumwand (2.1) gehalten ist, wobei die Empfangseinrichtung (14) eine elektrische Isolierung (14.2) aufweist, wodurch die Empfangseinrichtung (14) von der Haltevorrichtung (20) elektrisch isoliert ist und somit als Dipol gegenüber den Garraumwänden (2.1) ausgebildet ist.

2. Haushaltsgerät nach Anspruch 1,
**dadurch gekennzeichnet,**
**dass** die Empfangseinrichtung (14) eine elektrische Isolierung (14.3) aufweist, die die Empfangseinrichtung (14) gegenüber der Umgebung vollständig elektrisch isoliert.

3. Haushaltsgerät nach einem der Ansprüche 1 bis 2,
**dadurch gekennzeichnet,**
**dass** die Empfangseinrichtung (14) als eine Stabantenne ausgebildet ist

4. Haushaltsgerät nach mindestens einem der Ansprüche 1 bis 3,
**dadurch gekennzeichnet,**
**dass** die Empfangseinrichtung (14) einen Sensor (22), insbesondere einen Temperatursensor (22), aufweist.

5. Haushaltsgerät nach Anspruch 4,
**dadurch gekennzeichnet,**
**dass** die Empfangseinrichtung (14) einen Hohlraum (14.1) aufweist, in dem der Sensor (22) angeordnet ist.

6. Haushaltsgerät nach mindestens einem der Ansprüche 1 bis 5,
**dadurch gekennzeichnet,**
**dass** das Heizelement (18) als ein Strahlungsheizkörper (18) ausgebildet ist.

7. Haushaltsgerät nach mindestens einem der Ansprüche 1 bis 6,
**dadurch gekennzeichnet,**
**dass** die Haltevorrichtung (20) als ein Flansch (20) ausgebildet ist, in dem Durchbrüche (20.1) für den elektrischen Anschluss des Heizelements (18) und der Empfangseinrichtung (14) an eine Steuereinrichtung (16) des Haushaltsgeräts ausgebildet sind.

## Claims

1. Domestic appliance having a heatable processing chamber, comprising an antenna array for exchanging signals between a transmitting device and a receiving device of a domestic appliance comprising a heatable processing chamber, in particular for measuring the temperature inside the processing chamber, the receiving device being arranged in the processing chamber,
**characterised in that**
the receiving device (14) is held on a wall (2.1) of the processing chamber together with a heating element (18) by means of a holding device (20), the receiving device (14) comprising electrical insulation (14.2), by means of which the receiving device (14) is electrically insulated from the holding device (20) and is thus designed as a dipole relative to the walls (2.1) of the cooking chamber.

2. Domestic appliance according to claim 1,
**characterised in that**
the receiving device (14) comprises electrical insulation (14.3) which completely electrically insulates the receiving device (14) from its surroundings.

3. Domestic appliance according to any of claims 1 to 2,
**characterised in that**
the receiving device (14) is designed to be a rod antenna.

4. Domestic appliance according to at least one of claims 1 to 3,
**characterised in that**
the receiving device (14) comprises a sensor (22), in particular a temperature sensor (22).

5. Domestic appliance according to claim 4,
**characterised in that**
the receiving device (14) comprises a cavity (14.1) in which the sensor is arranged (22).

6. Domestic appliance according to at least one of claims 1 to 5,
**characterised in that**
the heating element (18) is designed to be a radiant heating element (18).

7. Domestic appliance according to at least one of claims 1 to 6,
**characterised in that**
the holding device (20) is designed as a flange (20) in which openings (20.1) are formed for electrically connecting the heating element (18) and the receiving device (14) to a control device (16) of the domestic appliance.

## Revendications

1. Appareil électroménager avec un espace de traitement chauffable, comprenant un dispositif d'antenne pour l'échange de signaux entre un système d'émission et un système de réception d'un appareil électroménager avec un espace de traitement chauffable, en particulier pour la détermination de la température dans l'espace de traitement, le système de réception étant disposé dans l'espace de traitement,
**caractérisé en ce que**
le système de réception (14) est retenu sur une paroi (2.1) d'espace de traitement par le biais d'un dispositif de retenue (20) commun avec un élément de chauffage (18), le système de réception (14) présentant une isolation électrique (14.2), ce qui fait que le système de réception (14) est électriquement isolé du dispositif de retenue (20) et est donc constitué en tant que dipôle par rapport aux parois (2.1) d'espace de cuisson.

2. Appareil électroménager selon la revendication 1,
**caractérisé en ce que**
le système de réception (14) présente une isolation électrique (14.3) qui isole électriquement de façon complète le système de réception (14) par rapport à l'environnement.

3. Appareil électroménager selon l'une des revendications 1 à 2,
**caractérisé en ce que**
le système de réception (14) est constitué en tant qu'antenne en tige.

4. Appareil électroménager selon au moins l'une des revendications 1 à 3,
**caractérisé en ce que**
le système de réception (14) présente un capteur (22), en particulier un capteur de température (22).

5. Appareil électroménager selon la revendication 4,
**caractérisé en ce que**
le système de réception (14) présente une cavité (14.1) dans laquelle est disposé le capteur (22).

6. Appareil électroménager selon l'une des revendications 1 à 5,
**caractérisé en ce que**
l'élément de chauffage (18) est constitué en tant que corps chauffant à rayonnement (18).

7. Appareil électroménager selon au moins l'une des revendications 1 à 6,
**caractérisé en ce que**
le dispositif de retenue (20) est constitué en tant que bride (20) dans laquelle sont constituées des percées (20.1) pour le raccordement électrique de l'élément de chauffage (18) et du système de réception (14) à un système de commande (16) de l'appareil électroménager.
